# EUROPÄISCHE PATENTSCHRIFT

(11) **EP 3 679 558 B1**
(45) Veröffentlichungstag und Bekanntmachung des Hinweises auf die Patenterteilung: **27.10.2021**
(21) Anmeldenummer: 18765627.7
(22) Anmeldetag: 06.09.2018
(51) Int. Cl.: G08C 23/00, H04B 13/00

(54) **SYSTEM UND VERFAHREN ZUR ÜBERTRAGUNG VON INFORMATION ÜBER EINEN STOFFSTROM**
SYSTEM AND METHOD FOR TRANSMITTING DATA VIA A MATERIAL STREAM
SYSTÈME ET PROCÉDÉ SERVANT À TRANSFÉRER UNE INFORMATION PAR L'INTERMÉDIAIRE D'UN FLUX DE MATIÈRES

(30) Priorität: 08.09.2017 DE 102017215888
(43) Veröffentlichungstag der Anmeldung: 15.07.2020
(73) Patentinhaber: Technische Hochschule Lübeck, 23562 Lübeck (DE)
(72) Erfinder: ARDELT, Gunther, 22967 Tremsbüttel (DE); HELLBRÜCK, Horst, 23562 Lübeck (DE); KÜLLS, Christoph, 23562 Lübeck (DE)
(74) Vertreter: Wallinger, Michael
(86) Internationale Anmeldenummer: PCT/EP2018/073922
(87) Internationale Veröffentlichungsnummer: WO 2019/048510

(56) Entgegenhaltungen:
- IAN F AKYILDIZ ET AL: "Monaco: fundamentals of molecular nano-communication networks", TECHNICAL REPORT OF WIRELESS NETWORKING GROUP, COORDINATED SCIENCE LABORATORY; DEPT. ELECTRICAL AND COMPUTER ENGINEERING; UNIVERSITY OF ILLINOIS AT URBANA-CHAMPAIGN, US, Bd. 19, Nr. 5, 1. Oktober 2012 (2012-10-01), Seiten 12-18, XP011471325, ISSN: 1536-1284, DOI: 10.1109/MWC.2012.6339467
- AKDENIZ BAYRAM CEVDET ET AL: "On the performance of the modulation methods in time-varying molecular communication channels", 2017 40TH INTERNATIONAL CONFERENCE ON TELECOMMUNICATIONS AND SIGNAL PROCESSING (TSP), IEEE, 5. Juli 2017 (2017-07-05), Seiten 128-131, XP033232204, DOI: 10.1109/TSP.2017.8075951 [gefunden am 2017-10-19]

## Beschreibung

Die Erfindung betrifft ein System und ein Verfahren zur Übertragung von Information über einen Stoffstrom, insbesondere einen Wasserstrom.

In der Hydrologie wird die sog. Isotopenanalyse zur Untersuchung von Wasserkreisläufen genutzt. Dabei werden Änderungen in den Verhältnissen natürlich vorkommender stabiler Isotope im Wasser analysiert und als natürlicher Marker für die Herkunft des Wassers und/oder als Markierstoff zur Untersuchung von Transportprozessen verwendet.

Die Messung der Konzentration von Isotopen oder Isotopomeren in einem Wasservolumen kann mit Massenspektrometern durchgeführt werden. Dabei sind ausschließlich Einzelmessungen von Proben möglich. Insbesondere können nur wenige Messungen pro Tag durchgeführt werden. Die Frequenz der Messung eines derartigen Gerätes liegt bei 10⁻⁴ Hz, also bei ca. einer Messung alle 10.000 Sekunden.

Aus Akyildiz et. al.: MoNaCo: Fundamentals of Molecular Nano-Communication Networks, in: Wireless Nanoscale Communications, 2012, Band 19, Ausgabe 5, Seiten 12-18 ist die Verwendung von Molekülen zur Kodierung und Übertragung von Information zwischen Vorrichtungen im 20 Nanomaßstab (Nanomaschinen) bekannt. In einem Molekül-Emissionsprozess wird durch Ausgabe von Molekülen ein Ausgangssignal erzeugt, aus dem nach einem Diffusionsprozess in einem Empfangsprozess die Information extrahiert werden kann.

Es ist eine Aufgabe der Erfindung, den Informationsfluss über einen Stoffstrom weiter zu verbessern, insbesondere Information gezielt zu übertragen.

Diese Aufgabe wird gelöst durch ein System und ein Verfahren zur Übertragung von Informationen über einen Stoffstrom gemäß den unabhängigen Ansprüchen.

Das erfindungsgemäße System zur Übertragung von, insbesondere digitaler, Information über einen Stoffstrom, insbesondere einen Wasserstrom, weist eine Informationseingabevorrichtung und eine stromabwärts von der Informationseingabevorrichtung angeordnete Informationsausgabevorrichtung auf. Die Informationseingabeeinrichtung weist eine Kodiereinrichtung, welche zur Modulation der Konzentration von einem oder mehreren Isotopen, insbesondere Isotopomeren, in einem ersten Stoffvolumen anhand der zu übertragenden Information eingerichtet ist, und eine Aktoreinrichtung, welche zum Einbringen des ersten Stoffvolumens mit der modulierten Konzentration von einem oder mehreren Isotopen, insbesondere Isotopomeren, in den Stoffstrom eingerichtet ist, auf. Die Informationsausgabevorrichtung weist eine Entnahmeeinrichtung, welche zur Entnahme eines zweiten Stoffvolumens eingerichtet ist, und eine Detektionseinrichtung, welche zur Ermittlung der Konzentration von einem oder mehreren Isotopen, insbesondere Isotopomeren, im zweiten Stoffvolumen eingerichtet ist, auf. Zudem ist eine Recheneinrichtung dazu eingerichtet, die zu übertragende Information aus der ermittelten Konzentration von einem oder mehreren Isotopen, insbesondere Isotopomeren, zu rekonstruieren und auszugeben.

Das erfindungsgemäße Verfahren zur Übertragung von, insbesondere digitaler, Information über einen Stoffstrom, insbesondere Wasserstrom, weist die folgenden Schritte auf: Modulieren einer Konzentration von einem oder mehreren Isotopen, insbesondere Isotopomeren, in einem ersten Stoffvolumen anhand der zu übertragenden Information; Einbringen des ersten Stoffvolumens mit der modulierten Konzentration von einem oder mehreren Isotopen, insbesondere Isotopomeren, in den Stoffstrom durch eine Aktoreinrichtung; Entnehmen eines zweiten Stoffvolumens aus dem Stoffstrom mit einer Entnahmeeinrichtung, welche stromabwärts von der Aktoreinrichtung angeordnet ist; Ermitteln der Konzentration von einem oder mehreren Isotopen, insbesondere Isotopomeren, im zweiten Stoffvolumen; Rekonstruieren der zu übertragenden Information aus der ermittelten Konzentration von einem oder mehreren Isotopen, insbesondere Isotopomeren; und Ausgeben der rekonstruierten Information.

Unter einer Modulation einer Konzentration von einem oder mehreren Isotopen, insbesondere Isotopomeren, ist im Sinne der Erfindung ein Einstellen der Konzentration zu verstehen. Beispielsweise kann in dem ersten Stoffvolumen eine erste Abundanz eines ersten Isotops und eine zweite Abundanz eines zweiten Isotops etc. eingestellt werden, so dass die entsprechenden Konzentrationen und/oder Isotopenverhältnisse in einer entsprechenden, etwa zu einem späteren Zeitpunkt stromabwärts, entnommenen Probe eindeutig bestimmt werden können.

Das Einstellen der Konzentration kann auch ein zeitliches Einstellen sein, bei dem die Konzentration eines einzelnen oder mehrerer Isotope im Laufe der Zeit verändert wird. Beispielsweise kann in dem ersten Stoffvolumen zu einem ersten Zeitpunkt eine erste Abundanz eines ersten Isotops und eine zweite Abundanz eines zweiten Isotops, und zu einem zweiten Zeitpunkt eine zweite Abundanz des ersten Isotops und eine zweite Abundanz eines zweiten Isotops etc. eingestellt werden, so dass die entsprechenden Konzentrationen und/oder Isotopenverhältnisse in entsprechenden, etwa zu entsprechenden späteren Zeitpunkten stromabwärts, entnommenen Proben eindeutig bestimmt werden können.

Unter einer Aktoreinrichtung im Sinne der Erfindung ist insbesondere ein Pumpen- und/oder Ventilsystem zu verstehen, welches das erste Stoffvolumen zumindest in den Stoffstrom einbringen kann, beispielsweise durch Öffnen eines Ventils oder Pumpen des ersten Stoffvolumens in den Stoffstrom. Vorzugsweise ist die Aktoreinrichtung zusätzlich dazu eingerichtet, das erste Stoffvolumen aus dem Stoffstrom zu entnehmen, insbesondere, um die Modulation der Konzentration von einem oder mehreren Isotopen, insbesondere Isotopomeren, in dem ersten Stoffvolumen durch die Kodiereinrichtung zu ermöglichen. Die Aktoreinrichtung kann insbesondere dazu eingerichtet sein, ein dem ersten Stoffvolumen entsprechendes Stoffvolumen aus dem Stoffstrom zu entnehmen und parallel dazu das erste Stoffvolumen, welches die modulierte Konzentration von einem oder mehreren Isotopen, insbesondere Isotopomeren, enthält, in den Stoffstrom zurück zu führen. Dadurch kann dem Stoffstrom eine definierte Menge des Stoffes entnommen, die Information in der definierten Menge des Stoffes mittels der Modulation codiert und die definierte Menge des Stoffes wieder hinzugefügt werden, ohne dass der Stoffstrom gestoppt oder geändert, insbesondere umgeleitet, werden muss.

Ein Aspekt der Erfindung basiert auf dem Ansatz, zu übertragende Information durch eine Modulation einer Isotopenkonzentrationen oder einer Isotopomerkonzentration, insbesondere durch die Modulation eines Isotopenverhältnisses oder eines Isotopomerverhältnisses, in einem ersten Stoffvolumen durch eine Kodiereinrichtung zu kodieren. Die derart kodierte Information wird dann durch Einbringen des ersten Stoffvolumens in einen Stoffstrom durch eine Aktoreinrichtung von diesem Stoffstrom stromabwärts befördert, wo dem Stoffstrom durch eine Entnahmeeinrichtung ein zweites Stoffvolumen entnommen wird und die Information anhand der darin vorliegenden Isotopenkonzentration, insbesondere der Isotopomerkonzentration, bzw. des Isotopenverhältnisses, insbesondere des Isotopomerverhältnisses, durch eine Recheneinrichtung dekodiert wird, so dass sie ausgegeben werden kann.

Dadurch kann die, insbesondere den Stoffstrom betreffende, Information intrinsisch und sicher übertragen werden. Die Übertragung der Information erfordert insbesondere keine modellbasierte Datenübertragung und ist daher besonders genau und zuverlässig.

Die Übertragung von Information über einen Stoffstrom dient vorzugsweise zur Kommunikation zwischen einer Informationseingabevorrichtung und einer Informationsausgabevorrichtung. Die einem flüssigen Transportmedium des Stoffstroms, vorzugsweise Wasser, zugeführte und vorzugsweise eindeutig bestimmbare Konzentration von Isotopen oder Isotopomeren, insbesondere ein eindeutig bestimmbares Isotopenverhältnis bzw. Isotopomerenverhältnis, enthält dabei die kodierte Information und ermöglicht deren Transport mit dem Stoffstrom.

Dabei wird anhand der derart übertragenen Information eine gezielte Regelung oder Steuerung von weiteren Vorrichtungen zur Beeinflussung des Stoffstroms, beispielsweise Pumpen oder Ventilen, ermöglicht.

Die Modulation der Konzentration von einem oder mehreren Isotopen, insbesondere Isotopomeren, und die stromabwärts erfolgende Demodulation kann zur Kommunikation über im Wesentlichen beliebige Distanzen, insbesondere von wenigen cm bis zu einigen hunderten von Metern, gegebenenfalls bis zu einigen Kilometern, eingesetzt werden. Dabei wird die Information durch Dispersion über längere Zeiträume, insbesondere von einigen Minuten oder einigen Stunden, verwischt. Somit erfolgt im Wesentlichen keine Verschmutzung des Stoffstroms bzw. im Wesentlichen keine Veränderung der Zusammensetzung des Stoffstroms. Entsprechend werden Isotopenkonzentrationen, insbesondere Isotopomerkonzentration, bzw. Isotopenverhältnisse, insbesondere Isotopomerverhältnisses, vorzugsweise über die Zeit, in der Weise moduliert, dass die derart kodierte Information für Zeitmaßstäbe von Minuten bis zu Stunden, gegebenenfalls einigen Tagen, lesbar sind. Es handelt sich daher sowohl um eine saubere als auch eine nachhaltige Kommunikation, bei der die in den Stoffstrom eingebrachte Information über einen längeren Zeitraum ausgelesen werden kann und die im Wesentlichen keine bleibende Änderung von Isotopenkonzentrationen, insbesondere Isotopomerkonzentrationen, im Stoffstrom bewirkt.

Die Übertragung von Information über einen Stoffstrom ist besonders vorteilhaft einsetzbar in, insbesondere geschlossenen, Wasserkreisläufen, wie sie etwa in der Produktion oder von Wasserversorgern eingesetzt werden. Alternativ kann die Übertragung von Informationen über einen Stoffstrom vorteilhaft auch in Wasserversorgungsnetzwerken, insbesondere in Wasserleitungen in Gebäuden, eingesetzt werden. Beispielsweise kann bei einer Verschmutzung des Wassers die Information über den Zustand des Wassers direkt mit dem Wasser übertragen werden und das Abschalten von Pumpen und/oder Stoffströmen stromabwärts basierend auf dieser übertragenen Information gesteuert werden.

Insgesamt ermöglicht die Erfindung eine Verbesserung des Informationsflusses über einen Stoffstrom, insbesondere die Kommunikation über den Stoffstrom.

In einer bevorzugten Ausführung ist die zu übertragende Information eine digitale Information, welche beispielsweise als Binärcode vorliegt. Vorzugsweise weist die Kodiereinrichtung eine Schnittstelle auf, über welche die digitale Information eingebbar ist. Alternativ oder zusätzlich kann die Kodiereinrichtung auch dazu eingerichtet sein, zur Verfügung gestellte Information in digitale Information, insbesondere in einen Binärcode, umzuwandeln. Digitale Information, insbesondere eine binär codierte Information, kann besonders leicht durch eine Modulation einer Konzentration von einem oder mehreren Isotopen, insbesondere Isotopen mehreren, bzw. der Modulation eines Isotopenverhältnisses, insbesondere Isotopomerverhältnisses, kodiert, in den Stoffstrom eingebracht und von diesem übertragen werden.

In einer bevorzugten Ausführung sind die Aktoreinrichtung und die Entnahmeeinrichtung dazu eingerichtet, das erste Stoffvolumen und das zweite Stoffvolumen in vorgegebenen Zeitintervallen in den Stoffstrom einzubringen bzw. aus diesem zu entnehmen. Vorzugsweise sind die Zeitintervalle kürzer als 5 Stunden, bevorzugt kürzer als 1 Stunde, besonders bevorzugt kürzer als 1 Minute, insbesondere kürzer als 5 Sekunden, am bevorzugtesten kürzer als 1 Sekunde. Dadurch kann im Wesentlichen jederzeit eine Information in den Stoffstrom eingebracht bzw. von diesem übertragen werden. Entsprechend wird auch eine zeitlich enge, im Wesentlichen kontinuierliche Überwachung des Stoffstromes auf eine darin enthaltene Information ermöglicht.

Vorzugsweise sind die Zeitintervalle derart vorgegeben, dass die zu übertragende Information dem ersten Stoffvolumen über eine zeitliche Modulation der Konzentration von einem oder mehreren Isotopen, insbesondere Isotopomeren, aufgeprägt bzw. ausgelesen werden kann. Beispielsweise können in fünf aufeinanderfolgenden Zeitintervallen fünf Stellen eines Binärcodes übermittelt werden, indem die Konzentration in jedem der Zeitintervalle, welches jeweils einer Stelle des Binärcodes entspricht, jeweils derart moduliert wird, dass sie oberhalb oder unterhalb eines Konzentrationsschwellenwerts liegt, was einer 1 bzw. einer 0 im Binärcode entspricht.

In einer weiteren bevorzugten Ausführung ist die Recheneinrichtung dazu eingerichtet, die zu übertragende Information anhand von aufeinanderfolgend ermittelten Konzentrationen von einem oder mehreren Isotopen, insbesondere Isotopomeren, im zweiten Stoffvolumen zu rekonstruieren. Vorzugsweise ist die Recheneinrichtung dazu eingerichtet, aus den aufeinanderfolgend ermittelten Konzentrationen eine digitale Information, insbesondere einen Binärcode, zu rekonstruieren. Dadurch kann die Information genau und zuverlässig übertragen werden.

In einer weiteren bevorzugten Ausführung ist die Detektionseinrichtung dazu eingerichtet ist, die Konzentration von einem oder mehreren Isotopen, insbesondere Isotopomeren, durch eine Laserabsorptionsmessung zu ermitteln. Vorzugsweise weist die Detektionsvorrichtung dazu eine Laserquelle, beispielsweise eine Laserdiode, und eine entsprechende Detektionseinheit, beispielsweise eine Fotodiode, auf. Die Laserabsorptionsmessung kann insbesondere mittels der sog. Tunable Diode Laser Absorption-Messtechnik (TDLA) ausgeführt werden. Dadurch kann eine Isotopenkonzentration bzw. ein Isotopenverhältnis besonders genau ermittelt werden.

In einer weiteren bevorzugten Ausführung ist die Kodiereinrichtung dazu eingerichtet, die Konzentration von Sauerstoffisotopen und/oder Wasserstoffisotopen im ersten Stoffvolumen zu modulieren, und die Detektionseinrichtung ist dazu eingerichtet, die Konzentration von Sauerstoffisotopen und/oder Wasserstoffisotopen im zweiten Stoffvolumen zu ermitteln. Insbesondere ist die Detektionsvorrichtung dazu eingerichtet, eine Laserabsorptionsmessung bei Wellenlängen auszuführen, bei denen Isotopomere des Wassermoleküls absorbieren.

Dies ist besonders vorteilhaft, wenn Wasser als Transportmedium verwendet wird, d.h. der Stoffstrom ein Wasserstrom ist, da somit der Träger der Information, d.h. die Isotopomere, die gleichen Transporteigenschaften aufweist wie das Transportmedium. Insbesondere sind die Isotopomere von Wasser chemisch identisch zu Wasser, insbesondere gesundheitlich unbedenklich.

Alternativ oder zusätzlich ist die Kodiereinrichtung dazu eingerichtet, die Konzentration von Isotopomeren im Wasser gelöster Gase, insbesondere Stickstoff N₂ und/oder Krypton Kr, im ersten Stoffvolumen zu modulieren. Entsprechend ist die Detektionsvorrichtung vorzugsweise dazu eingerichtet, die Konzentration von Isotopomeren dieser Gase im zweiten Stoffvolumen zu ermitteln.

Vorzugsweise ist die Kodiereinrichtung dazu eingerichtet, wenigstens ein Gas, insbesondere Stickstoff N₂ und/oder Krypton Kr, im ersten Stoffvolumen zu lösen und die Konzentration von Isotopen, insbesondere Isotopomeren, des wenigstens einen Gases, zu modulieren.

Durch die vorstehend beschriebenen Ausführungen kann die Konzentration von einem oder mehreren Isotopen, insbesondere Isotopomeren, besonders zuverlässig moduliert und damit die Information besonders zuverlässig codiert und übertragen werden.

In einer weiteren bevorzugten Ausführung weist das System eine Steuerungseinrichtung auf, welche dazu eingerichtet ist, den Stoffstrom anhand der ausgegeben rekonstruierten Information zu steuern. Insbesondere ist die Steuerungseinrichtung dazu eingerichtet, eine oder mehrere Vorrichtung zur Beeinflussung des Stoffstroms, beispielsweise Pumpen und/oder Ventilen, zu steuern, oder weist diese Vorrichtungen auf. Dadurch kann, beispielsweise im Fall einer Verschmutzung eines Wasserkreislaufs, der Stoffstrom automatisiert gestoppt oder umgeleitet werden.

In einer weiteren bevorzugten Ausführung ist die Informationseingabeeinrichtung und/oder die Informationsausgabeeinrichtung für das Internet der Dinge (loT) als Intelligenter Gegenstand ausgelegt. Derartig konfigurierbar ist das System in kabellose Sensornetzwerke und -systeme oder Informationssysteme, die aus dem Zusammenspiel einzelner Komponenten und Dienste im Internet der Dinge gebildet werden, integrierbar und skalierbar.

Weitere Merkmale, Vorteile und Anwendungsmöglichkeiten der Erfindung ergeben sich aus der nachfolgenden Beschreibung im Zusammenhang mit den Figuren. Es zeigen wenigstens teilweise schematisch:
- Fig. 1: ein Beispiel für ein System zur Übertragung von Information durch einen Stoffstrom;
- Fig. 2: ein Beispiel für ein Verfahren zur Übertragung von Information durch einen Stoffstrom; und
- Fig. 3: ein Beispiel für eine Variante des Verfahrens zur Übertragung von Information durch einen Stoffstrom.

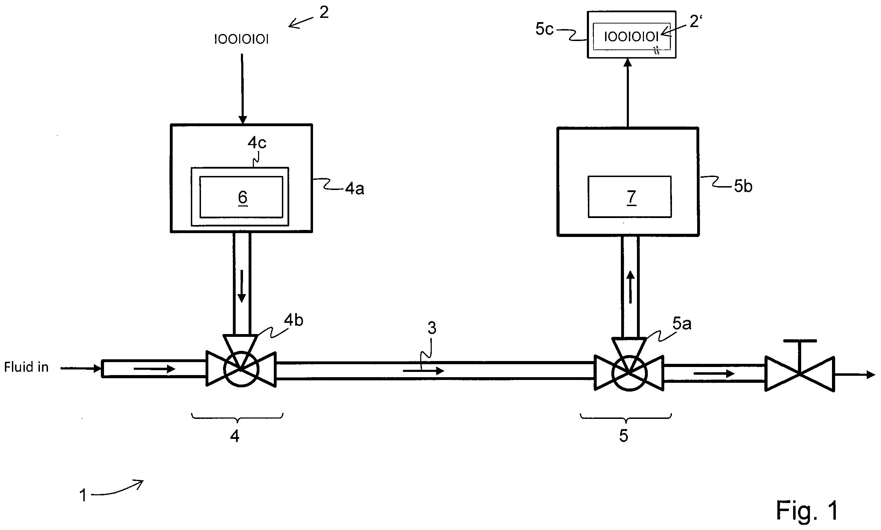

Figur 1 zeigt ein Beispiel für ein System 1 zur Übertragung von Information 2 durch einen Stoffstrom 3 mit einer Informationseingabevorrichtung 4 und einer stromabwärts der Informationseingabevorrichtung 4 angeordneten Informationsausgabevorrichtung 5.

Die zu übertragende Information 2, welche im vorliegenden Beispiel als Binärcode mit acht Stellen vorliegt, wird von einer Kodiereinrichtung 4a der Informationseingabevorrichtung 4 dazu genutzt, eine Konzentration von einem oder mehreren Isotopen, insbesondere Isotopomeren, in einem ersten Stoffvolumen 6 derart zu modulieren, dass die zu übertragende Information 2 im ersten Stoffvolumen 6 in der Konzentration von einem oder mehreren Isotopen, insbesondere Isotopomeren, oder einem Isotopenverhältnis kodiert vorliegt. Der im Stoffvolumen 6 enthaltene Stoff, beispielsweise Wasser, wird entsprechend auch als Transport- oder Trägermedium bezeichnet, da es die zu übertragende Information 2 trägt bzw. transportiert.

Die Kodiereinrichtung 4a ist vorzugsweise dazu eingerichtet, die Konzentration von einem oder mehreren Isotopen, insbesondere Isotopomeren, oder ein Verhältnis von wenigstens zwei verschiedenen Isotopen, insbesondere Isotopomeren, durch Zuführen der entsprechenden Isotope, insbesondere Isotopomere, in das erste Stoffvolumen 6 zu modulieren.

In dem in Figur 1 gezeigten Beispiel weist die Kodiereinrichtung 4a zu diesem Zweck einen Tank 4c auf, in dem das erste Stoffvolumen 6 zur Modulation der Konzentration bzw. des Konzentrationsverhältnisses bereitgestellt werden kann.

Das erste Stoffvolumen 6 kann dabei dem Stoffstrom 3 entnommen sein oder von der Informationseingabevorrichtung 4 bereitgestellt werden.

Eine Aktoreinrichtung 4b der Informationseingabevorrichtung 4 führt das erste Stoffvolumen 6 dem Stoffstrom 3 zu, beispielsweise durch Öffnen eines Ventils oder Aktivieren einer Pumpe. Dadurch kann das erste Stoffvolumen 6 und damit die in ihm enthaltene Information 2 in Form der modulierten Konzentration von einem oder mehreren Isotopen, insbesondere Isotopomeren, stromabwärts bis zur Informationsausgabevorrichtung 5 transportiert werden.

Die Kodiereinrichtung 4a ist vorzugsweise dazu eingerichtet, die Konzentration von einem oder mehreren Isotopen, insbesondere Isotopomeren, oder ein Verhältnis von wenigstens zwei verschiedenen Isotopen, insbesondere Isotopomeren, durch eine zeitliche Änderung der Konzentration bzw. des Verhältnisses zu modulieren. Vorzugsweise wird dazu eine erste Konzentration oder ein erstes Verhältnis im ersten Stoffvolumen 6 durch die

Kodiereinrichtung 4a eingestellt und durch die Aktoreinrichtung 4b dem Stoffstrom 3 zugeführt. Nach einem vorgegebenen Zeitintervall wird im ersten Stoffvolumen 6 eine zweite Konzentration oder ein zweites Verhältnis eingestellt und dem Stoffstrom 3 zugeführt. Dieser Vorgang wird wiederholt, bis in der dadurch bewirkten zeitlichen Modulation der Konzentration oder des Verhältnisses die gesamte zu übertragende Information 2 im Stoffstrom 3 enthalten ist.

Beispielsweise kann die zu übertragende Information 2 als Binärcode zur Verfügung stehen oder von der Kodierungseinrichtung 4a in einen Binärcode umgewandelt werden. Die im ersten Stoffvolumen 6 jeweils eingestellte Konzentration oder Verhältnis entspricht dabei einem Bit. Liegt die Konzentration oder das Verhältnis beispielsweise unterhalb eines vorgegebenen Schwellenwerts, entspricht dies einer 0. Liegt die Konzentration dagegen oberhalb des vorgegebenen Schwellenwerts, entspricht dies einer 1. Durch N-malige Wiederholung des oben beschriebenen Vorgangs ist die gesamte zu übertragende Information 2 Stoffstrom 3 enthalten, wenn N die Anzahl der Bits im Binärcode ist.

Alternativ kann die gesamte zu übertragende Information 2 aber auch in einem einzigen ersten Stoffvolumen 6 enthalten sein. Ein erstes vorgegebenes Isotopenverhältnis kann beispielsweise einer Nachricht "Trinkwasser abkochen", ein zweites vorgegebenes Isotopenverhältnis einer Nachricht "Trinkwasser wegschütten", ein drittes vorgegebenes Isotopenverhältnis einer Nachricht "Bakterien im Trinkwasser enthalten" entsprechen. Das erste Stoffvolumen 6 mit einem entsprechenden Isotopenverhältnis kann beispielsweise bei einem Vorfall in einem Trinkwassersystem von einer Informationseingabevorrichtung 4 eines Wasserversorgers in das Trinkwassersystem eingespeist werden und die entsprechende Information von Informationsausgabevorrichtungen 5 in den Haushalten ausgelesen werden.

Alternativ können einzelnen Bits verschiedenen Isotopenverhältnissen, also unterschiedlichen Abundanzen von Isotopen bzw. Isotopomeren relativ zueinander, entsprechen, wobei ein Bit einer 0 oder einer 1 entspricht, wenn das entsprechende Verhältnis unterhalb bzw. oberhalb eines vorgegebenen Schwellenwerts liegt. Ein Binärcode mit N Stellen benötigt dabei zur Übermittlung dabei N verschiedene, einzeln bestimmbare bzw. einstellbare Isotopenverhältnisse.

Die Informationsausgabevorrichtung 5 weist eine Entnahmeeinrichtung 5a auf, welche dazu eingerichtet ist, ein zweites Stoffvolumen 7 aus dem Stoffstrom 3 zu entnehmen. Das zweite Stoffvolumen 7 entspricht dabei einer Probe, durch deren Analyse die Konzentration von einem oder mehreren Isotopen, insbesondere Isotopomeren, oder das Verhältnis von wenigstens zwei Isotopen, insbesondere Isotopomeren, im Stoffstrom 3 bzw. in dem Teil des Stoffstroms 3, welcher zum Zeitpunkt der Entnahme des zweiten Stoffvolumens 7 an der Entnahmeeinrichtung 5a vorbeiströmt, ermittelt werden kann.

Zur Ermittlung der Konzentration ist eine Detektionseinrichtung 5b vorgesehen, welche vorzugsweise dazu eingerichtet ist, eine Laserabsorptionsmessung am zweiten Stoffvolumen 7 durchzuführen.

Die Laserabsorptionsmessung wird vorzugsweise mittels der sog. Tunable Diode Laser Absorption (TDLAS) durchgeführt, mit der es möglich ist, Messungen der Konzentration von einem oder mehreren Isotopen, insbesondere Isotopomeren, mit einer Laserdiode und bezüglich der Wellenlänge sehr genau eingestellten Lichtimpulsen im 1 Herz-Takt durchzuführen (vgl. Cavity-enhanced multiplexed comb spectroscopy down to the photon shot noise. R. Grilli, G. Mejean, C. Abd Alrahman, I. Ventrillard, S. Kassi, D. Romanini. Physical Review A, American Physical Society, 2012, 85, pp.51804).

Dabei wird eine Wellenlänge, bei der ein im zweiten Stoffvolumen 7 enthaltenes Isotopomer absorbiert, eingestellt und bei dieser Wellenlänge die Absorption gemessen und die Abundanz des Isotopomers bestimmt. Durch eine entsprechende Einstellung der Wellenlänge auf die Absorption eines weiteren Isotopomers kann auch dessen Abundanz gemessen werden. Aus dem Verhältnis der Abundanzen kann beispielsweise ein Isotopenverhältnis bestimmt werden.

Somit kann ein Isotopenverhältnis im zweiten Stoffvolumen mit der Frequenz von 1 Hz ermittelt werden.

Anhand der ermittelten Konzentration von einem oder mehreren Isotopen, insbesondere Isotopomeren, oder dem Verhältnis von zwei Isotopen, insbesondere Isotopomeren, kann die zu übertragenden Information 2 rekonstruiert werden. Dazu ist eine Recheneinrichtung 5c vorgesehen, welche beispielsweise die, insbesondere zeitliche, Modulation der Konzentration oder des Verhältnisses erfasst und daraus eine rekonstruierte Information 2' ableitet.

Analog zu Kodiereinrichtung 4a und Aktoreinrichtung 4b können auch Entnahmeeinrichtung 5a, Detektionseinrichtung 5b und Recheneinrichtung 5c dazu eingerichtet sein, das zweite Stoffvolumen 7 aus dem Stoffstrom 3 wiederholt zu entnehmen und die Konzentration oder das Verhältnis wiederholt zu ermitteln, wobei zwischen zwei Entnahmen jeweils das vorgegebene Zeitintervall liegt. Auf Basis der zeitlichen Abfolge der ermittelten Konzentrationen bzw. Verhältnisse kann die Recheneinrichtung 5c die zu übertragende Information 2 zusammensetzen und die rekonstruierte Information 2' ausgeben.

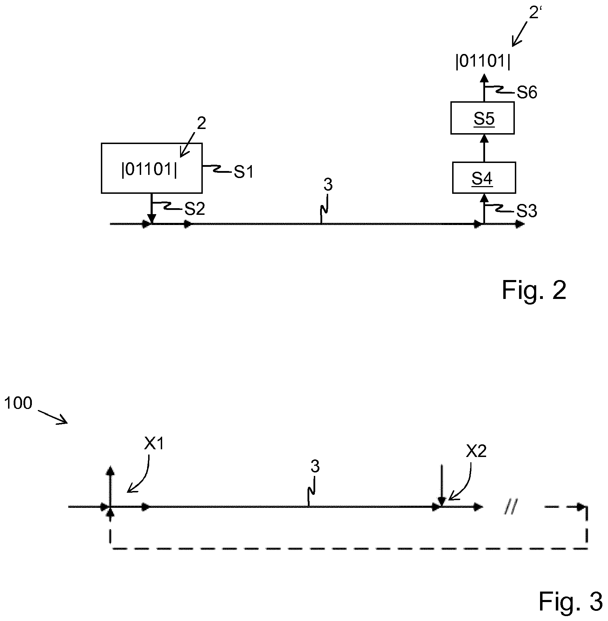

Figur 2 zeigt Schema eines Beispiels für ein Verfahren 100 zur Übertragung von Information 2 über einen Stoffstrom 3, insbesondere Wasserstrom. Dabei wird in einem Verfahrensschritt S1 eine Konzentration von einem oder mehreren Isotopen, insbesondere Isotopomeren, in einem ersten Stoffvolumen anhand der zu übertragenden Information 2 moduliert und in einem weiteren Verfahrensschritt S2 in den Stoffstrom 3, beispielsweise durch eine Aktoreinrichtung, eingebracht. Mit anderen Worten wird die zu übertragende Information 2 in dem ersten Stoffvolumen ortsbezogen kodiert, d.h. eine Konzentration von einem oder mehreren Isotopen in dem ersten Stoffvolumen synthetisiert, und in den Stoffstrom (ein)gemischt.

Stromabwärts wird in einem weiteren Verfahrensschritt S3 ein zweites Stoffvolumen aus dem Stoffstrom 3, etwa durch eine Entnahmeeinrichtung, entnommen, so dass in einem weiteren Verfahrensschritt S4 die Konzentration von einem oder mehreren Isotopen, insbesondere Isotopomeren, im zweiten Stoffvolumen ermittelt werden kann. Mit anderen Worten wird stromabwärts eine ortsbezogene Analyse des Stoffstroms 3 durchgeführt, in der das zweite Stoffvolumen aufgetrennt bzw. entmischt wird, um die Isotopenkonzentration zu ermitteln. Daraus kann in einem weiteren Verfahrensschritt S5 die zu übertragende Information 2 aus der ermittelten Konzentration von einem oder mehreren Isotopen, insbesondere Isotopomeren, rekonstruiert werden und als rekonstruierte Information 2', beispielsweise durch eine Ausgabeeinrichtung, in einem weiteren Verfahrensschritt S6 ausgegeben werden.

Figur 3 zeigt ein Beispiel einer Variante für ein Verfahren 100 zur Übertragung von Information über einen Stoffstrom 3, insbesondere Wasserstrom, in einer schematischen Darstellung. Dabei wird an einer ersten Position X1 des Stoffstroms 3 ein Stoffvolumen zur Analyse aus dem Stoffstrom entnommen und, insbesondere basierend auf dem Ergebnis der Analyse, durch ein erstes Stoffvolumen an einer zweiten Position X2 des Stoffstroms 3 mittels einer Informationseingabevorrichtung ersetzt. Dabei enthält das erste Stoffvolumen die zu übertragende Information, welche vorzugsweise vom Ergebnis der Analyse des an der ersten Position X1 entnommenen Stoffvolumens abhängt, in Form einer Isotopomerenkodierung, insbesondere eines Isotopomerenverhältnisses. Diese zu übertragende Information kann dann stromabwärts der zweiten Position X2 von einer Informationsausgabevorrichtung ausgewertet werden gegebenenfalls dazu genutzt werden, den Stoffstrom 3 zu beeinflussen.

Der Stoffstrom 3 kann dabei, zumindest teilweise, auch als Kreislauf, der durch eine gestrichelte Linie angedeutet ist, vorliegen, so dass die zu übertragende Information auch an der Position X1 von der Informationsausgabevorrichtung ausgewertet werden kann, die durch die Rückführung des Stoffstroms 3 im Kreislauf im Sinne der Erfindung stromabwärts der Informationseingabevorrichtung an der Position X2 angeordnet ist.

### Bezugszeichenliste

- 1: System zum Übermitteln von Information durch einen Stoffstrom
- 2: zu übermittelnde Information
- 2': rekonstruierte Information
- 3: Stoffstrom
- 4: Informationseingabevorrichtung
- 4a: Kodiereinrichtung
- 4b: Aktoreinrichtung
- 4c: Tank
- 5: Informationsausgabevorrichtung
- 5a: Entnahmeeinrichtung
- 5b: Detektionseinrichtung
- 5c: Recheneinrichtung
- 6: erstes Stoffvolumen
- 7: zweites Stoffvolumen
- 100: Verfahren zum Übermitteln von Information durch einen Stoffstrom

- S1 bis S6: Verfahrensschritte
- X1, X2: Positionen

## Patentansprüche

1. System (1) zur Übertragung von Information (2) über einen Stoffstrom (3), insbesondere Wasserstrom, mit einer Informationseingabevorrichtung (4), welche
- eine Kodiereinrichtung (4a), welche zur Modulation der Konzentration von einem oder mehreren Isotopen, insbesondere Isotopomeren, in einem ersten Stoffvolumen anhand der zu übertragenden Information (2) eingerichtet ist, und
- eine Aktoreinrichtung (4b), welche zum Einbringen des ersten Stoffvolumens mit der modulierten Konzentration von dem einen oder den mehreren Isotopen, insbesondere Isotopomeren, in den Stoffstrom (3) eingerichtet ist,
aufweist, und mit einer Informationsausgabevorrichtung (5), welche stromabwärts von der Informationseingabevorrichtung (4) angeordnet ist und
- eine Entnahmeeinrichtung (5a), welche zur Entnahme eines zweiten Stoffvolumens aus dem Stoffstrom (3) eingerichtet ist,
- eine Detektionseinrichtung (5b), welche zur Ermittlung der Konzentration von dem einen oder den mehreren Isotopen, insbesondere Isotopomeren, im entnommenen zweiten Stoffvolumen eingerichtet ist, und
- eine Recheneinrichtung (5c), welche zur Rekonstruktion der zu übertragenden Information (2) aus der ermittelten Konzentration von dem einen oder den mehreren Isotopen, insbesondere Isotopomeren, und zur Ausgabe der rekonstruierten Information (2') eingerichtet ist,
aufweist.

2. System (1) nach Anspruch 1, wobei die zu übertragende Information (2) eine digitale Information, insbesondere ein Binärcode, ist.

3. System (1) nach einem der vorangehenden Ansprüche, wobei die Aktoreinrichtung (4b) und die Entnahmeeinrichtung (5a) dazu eingerichtet sind, das erste Stoffvolumen und das zweite Stoffvolumen in vorgegebenen Zeitintervallen in den Stoffstrom (3) einzubringen bzw. aus diesem zu entnehmen.

4. System (1) nach Anspruch 3, wobei die Recheneinrichtung (5c) dazu eingerichtet ist, die zu übertragende Information (2) anhand von aufeinanderfolgend ermittelten Konzentrationen von einem oder mehreren Isotopen, insbesondere Isotopomeren, im zweiten Stoffvolumen zu rekonstruieren.

5. System (1) nach einem der vorangehenden Ansprüche, wobei die Detektionseinrichtung (5b) dazu eingerichtet ist, die Konzentration von einem oder mehreren Isotopen, insbesondere Isotopomeren, durch eine Laserabsorptionsmessung zu ermitteln.

6. System (1) nach einem der vorangehenden Ansprüche, wobei die Kodiereinrichtung (4a) dazu eingerichtet ist, die Konzentration von Sauerstoffisotopen und/oder Wasserstoffisotopen im ersten Stoffvolumen zu modulieren, wobei die Detektionseinrichtung (5b) dazu eingerichtet ist, die Konzentration von Sauerstoffisotopen und/oder Wasserstoffisotopen im zweiten Stoffvolumen zu ermitteln.

7. System (1) nach einem der vorangehenden Ansprüche mit einer Steuerungseinrichtung, welche dazu eingerichtet ist, den Stoffstrom (3) anhand der ausgegebenen rekonstruierten Information (2') zu steuern.

8. System (1) nach einem der vorangehenden Ansprüche, wobei die Informationseingabeeinrichtung (4) und/oder die Informationsausgabeeinrichtung (5) für das Internet der Dinge (IoT) als Intelligenter Gegenstand ausgelegt ist.

9. Verfahren (100) zur Übertragung von Information (2) über einen Stoffstrom (3), insbesondere Wasserstrom, mit den Schritten:
- Modulieren (S1) einer Konzentration von einem oder mehreren Isotopen, insbesondere Isotopomeren, in einem ersten Stoffvolumen anhand der zu übertragenden Information (2) durch eine Kodiereinrichtung (4a);
- Einbringen (S2) des ersten Stoffvolumens mit der modulierten Konzentration von dem einen oder den mehreren Isotopen, insbesondere Isotopomeren, in den Stoffstrom (3) durch eine Aktoreinrichtung (4b);
- Entnehmen (S3) eines zweiten Stoffvolumens aus dem Stoffstrom (3) mit einer Entnahmeeinrichtung (5a), welche stromabwärts von der Aktoreinrichtung (4b) angeordnet ist;
- Ermitteln (S4) der Konzentration von dem einen oder den mehreren Isotopen, insbesondere Isotopomeren, im entnommenen zweiten Stoffvolumen durch eine Detektionseinrichtung (5b);
- Rekonstruieren (S5) der zu übertragenden Information (2) aus der ermittelten Konzentration von dem eine oder den mehreren Isotopen, insbesondere Isotopomeren durch eine Recheneinrichtung (5c); und
- Ausgeben (S6) der rekonstruierten Information (2') mit der Recheneinrichtung (5c).

## Claims

1. System (1) for the transmission of information (2) via a material flow (3), in particular water flow, with an information input device (4) which comprises
- a coding device (4a) which is configured to modulate the concentration of one or more isotopes, in particular isotopomers, in a first volume of material on the basis of the information (2) to be transmitted, and
- an actuator device (4b) which is configured to introduce the first volume of material with the modulated concentration of the one or more isotopes, in particular isotopomers, into the material flow (3),
and with an information output device (5) which is arranged downstream of the information input device (4) and
- an extraction device (5a) which is configured to extract a second volume of material from the material flow (3),
- a detection device (5b) which is configured to determine the concentration of the one or more isotopes, in particular isotopomers, in the extracted second volume of material, and
- a computing device (5c) which is configured to reconstruct the information to be transmitted (2) from the determined concentration of the one or more isotopes, in particular isotopomers, and to output the reconstructed information (2').

2. System (1) according to claim 1, wherein the information (2) to be transmitted is digital information, in particular a binary code.

3. System (1) according to one of the preceding claims, wherein the actuator device (4b) and the extraction device (5a) are configured to introduce the first volume of material and the second volume of material into the material flow (3) or to extract them from it at predetermined time intervals.

4. System (1) according to claim 3, wherein the computing device (5c) is configured to reconstruct the information (2) to be transmitted on the basis of successively determined concentrations of one or more isotopes, in particular isotopomers, in the second volume of material.

5. System (1) according to one of the preceding claims, wherein the detection device (5b) is configured to determine the concentration of one or more isotopes, in particular isotopomers, by means of a laser absorption measurement.

6. System (1) according to one of the preceding claims, wherein the coding device (4a) is configured to modulate the concentration of oxygen isotopes and/or hydrogen isotopes in the first volume of material, wherein the detection device (5b) is configured to determine the concentration of oxygen isotopes and/or hydrogen isotopes in the second volume of material.

7. System (1) according to one of the preceding claims, with a control device which is configured to control the material flow (3) on the basis of the output reconstructed information (2').

8. System (1) according to one of the preceding claims, wherein the information input device (4) and/or the information output device (5) is designed as an intelligent object for the Internet of Things (IoT).

9. Method (100) for the transmission of information (2) via a material flow (3), in particular water flow, with the steps:
- modulating (S1), by means of a coding device (4a), a concentration of one or more isotopes, in particular isotopomers, in a first volume of material on the basis of the information (2) to be transmitted;
- introducing (S2), by means of an actuator device (4b), the first volume of material with the modulated concentration of the one or more isotopes, in particular isotopomers, into the material flow (3);
- extracting (S3) a second volume of material from the material flow (3) with an extraction device (5a) which is arranged downstream of the actuator device (4b);
- determining (S4), by means of a detection device (5b), the concentration of the one or more isotopes, in particular isotopomers, in the extracted second volume of material;
- reconstructing (S5), by means of a computing device (5c), the information (2) to be transmitted from the determined concentration of the one or more isotopes, in particular isotopomers; and
- outputting (S6) the reconstructed information (2') with the computing device (5c).

## Revendications

1. Système (1) de transmission d'informations (2) sur un flux de matière (3), en particulier un flux d'eau, avec un dispositif de saisie d'informations (4), lequel présente
- un équipement de codage (4a), lequel est mis au point pour la modulation de la concentration d'un ou de plusieurs isotopes, en particulier d'isotopomères, dans un premier volume de matière à l'aide des informations (2) à transmettre, et
- un équipement actionneur (4b), lequel est mis au point pour introduire le premier volume de matière avec la concentration modulée du ou des plusieurs isotopes, en particulier isotopomères, dans le flux de matière (3),
et avec un dispositif d'envoi d'informations (5), lequel est disposé en aval du dispositif de saisie d'informations (4) et présente
- un équipement de retrait (5a), lequel est mis au point pour retirer un deuxième volume de matière hors du flux de matière (3),
- un équipement de détection (5b), lequel est mis au point pour déterminer la concentration du ou des plusieurs isotopes, en particulier isotopomères, dans le deuxième volume de matière retiré, et
- un équipement de calcul (5c), lequel est mis au point pour la reconstitution des informations (2) à transmettre à partir de la concentration déterminée du ou des plusieurs isotopes, en particulier isotopomères, et pour envoyer les informations reconstituées (2').

2. Système (1) selon la revendication 1, dans lequel les informations (2) à transmettre sont des informations numériques, en particulier un code binaire.

3. Système (1) selon l'une quelconque des revendications précédentes, dans lequel l'équipement actionneur (4b) et l'équipement de retrait (5a) sont mis au point pour introduire dans le flux de matière (3) ou retirer de celui-ci le premier volume de matière et le deuxième volume de matière à des intervalles de temps spécifiés.

4. Système (1) selon la revendication 3, dans lequel l'équipement de calcul (5c) est mis au point pour reconstituer les informations (2) à transmettre à l'aide de concentrations déterminées successivement du ou de plusieurs isotopes, en particulier isotopomères, dans le deuxième volume de matière.

5. Système (1) selon l'une quelconque des revendications précédentes, dans lequel l'équipement de détection (5b) est mis au point pour déterminer la concentration d'un ou de plusieurs isotopes, en particulier isotopomères, par une mesure à absorption laser.

6. Système (1) selon l'une quelconque des revendications précédentes, dans lequel l'équipement de codage (4a) est mis au point pour moduler la concentration d'isotopes d'oxygène et/ou d'isotopes d'hydrogène dans le premier volume de matière, dans lequel l'équipement de détection (5b) est mis au point pour déterminer la concentration d'isotopes d'oxygène et/ou d'isotopes d'hydrogène dans le deuxième volume de matière.

7. Système (1) selon l'une quelconque des revendications précédentes, avec un équipement de commande, lequel est mis au point pour commander le flux de matière (3) à l'aide des informations reconstituées (2') envoyées.

8. Système (1) selon l'une quelconque des revendications précédentes, dans lequel l'équipement de saisie d'informations (4) et/ou l'équipement d'envoi d'informations (5) sont conçus en tant qu'objets intelligents pour l'Internet des objets (idO).

9. Procédé (100) pour la transmission d'informations (2) sur un flux de matière (3), en particulier un flux d'eau, avec les étapes :
- de modulation (S1) d'une concentration d'un ou de plusieurs isotopes, en particulier isotopomères, dans un premier volume de matière à l'aide des informations (2) à transmettre par un équipement de codage (4a) ;
- d'introduction (S2) du premier volume de matière avec la concentration modulée du ou des plusieurs isotopes, en particulier isotopomères, dans le flux de matière (3) par un équipement actionneur (4b) ;
- de retrait (S3) d'un deuxième volume de matière hors du flux de matière (3) avec un équipement de retrait (5a), lequel est disposé en aval de l'équipement actionneur (4b) ;
- de détermination (S4) de la concentration du ou des plusieurs isotopes, en particulier isotopomères, dans le deuxième volume de matière retiré par un équipement de détection (5b) ;
- de reconstitution (S5) des informations (2) à transmettre à partir de la concentration déterminée du ou des plusieurs isotopes, en particulier isotopomères, par un équipement de calcul (5c) ; et
- d'envoi (S6) des informations reconstituées (2') avec l'équipement de calcul (5c).
